# EUROPÄISCHE PATENTSCHRIFT

(11) **EP 3 665 028 B1**
(45) Veröffentlichungstag und Bekanntmachung des Hinweises auf die Patenterteilung: **23.11.2022**
(21) Anmeldenummer: 18725452.9
(22) Anmeldetag: 14.05.2018
(51) Int. Cl.: B60N 2/00, B60N 2/58, B60K 37/06, B60N 2/90, B60N 2/02

(54) **SYSTEM AUFWEISEND EIN FLEXIBLES FLÄCHENMATERIAL SOWIE POLSTER MIT EINEM SOLCHEN BEZUGSMATERIAL**
SYSTEM COMPRISING A FLEXIBLE SURFACE MATERIAL AND PAD COMPRISING SUCH A COATING MATERIAL
SYSTÈME COMPRENANT UN MATÉRIAU PLAN SOUPLE AINSI QUE REMBOURRAGE COMPRENANT UN TEL MATÉRIAU DE REVÊTEMENT

(30) Priorität: 08.08.2017 DE 102017213794
(43) Veröffentlichungstag der Anmeldung: 17.06.2020
(73) Patentinhaber: Benecke-Kaliko AG, 30419 Hannover (DE)
(72) Erfinder: STAHLHUT, Oliver, 30900 Wedemark OT Mellendorf (DE); SCHÜLLER, Markus, 31636 Linsburg (DE); GERKEN, Andreas, 30161 Hannover (DE)
(74) Vertreter: Continental Corporation
(86) Internationale Anmeldenummer: PCT/EP2018/062308
(87) Internationale Veröffentlichungsnummer: WO 2019/029853

(56) Entgegenhaltungen:
- EP-A1- 1 209 995
- WO-A1-98/37790
- DE-U1-202012 001 096
- US-B2- 9 630 533

## Beschreibung

Die Erfindung betrifft ein System, beinhaltend ein flexibles Flächenmaterial mit in dem Flächenmaterial integrierten Sensor- oder Signalelementen, welches an seinen Umgebungszustand angepasst werden kann oder entsprechend veränderbar ist. Ebenfalls betrifft die Erfindung ein Polster bzw. eine Polsterauflage mit einem solchen flexiblen Flächenmaterial als Bezugsmaterial sowie eine Kraftfahrzeugsitz mit einem solchen Polster.

Flexible Flächenmaterialien mit Sensor- oder Signalelementen sind insbesondere im Bereich der Kraftfahrzeugtechnik bekannt. Ausgangspunkt sind hier Überlegungen zur "Funktionalisierung" von Oberflächen bzw. der Beschichtungsfolien im Innenraum von Kraftfahrzeugen da gerade im Kfz-Innenraum eine Vielzahl von Funktionen durch die Fahrzeuginsassen geregelt und gesteuert werden müssen, z.B. die Klimaanlage, Heizfunktionen, Betätigung der Fensterheber, Einstellung von Spiegeln und Lampen, Musikanlageneinstellungen, Navigationsgeräteinsellungen, Bedienung von Kommunikationsgeräten etc.

Zur Bedienung dieser Funktionen waren und sind bisher in der Regel eine Vielzahl von separaten und in die Oberflächen von z.B. Armaturenbrett und Türverkleidung eingelassene Regler, Schalter und Einstelltaster etc. als "Human to Machine Interface (HMI) " notwendig, die bei der Innenraumgestaltung von den Designern berücksichtigt werden müssen und häufig die Designlinie im Innenraum stören. Zudem wirkt die Vielzahl von sichtbaren Einstellmöglichkeiten in modernen Fahrzeugen häufig unübersichtlich und erschwert dadurch eine intuitive Bedienung.

Es ist daher, wie gesagt, bereits bekannt, zur Bereitstellung von Bedienfunktionen in die Bedienoberfläche von Gegenständen eine Sensorik zu integrieren. Bei flexiblen Folien mit genarbten oder geprägten Oberflächen, wie z.B. bei Kunstlederfolien für den Automobilinnenraum, die nicht nur extremen Dehnungen bei der Herstellung und beim Aufbringen auf die festen Trägen unterworfen sind, sondern auch höchsten Temperaturschwankungen im Betrieb, ist die Integration von Sensorik jedoch schwierig und deshalb bisher nicht umfassend durchgesetzt.

Auf der anderen Seite sind Berührungssensoren als HMI in vielen anderen Fachgebieten schon etabliert, z.B. als touch-screen-Einrichtungen bei Smartphones oder Tablet-Computern. Solche Bedienungselemente oder -funktionen ermöglichen eine intuitive Bedienung bei gleichzeitiger Vermeidung mechanischer Knöpfe, Schalter, Drehregler oder Einstellräder.

Ähnliche Entwicklungen wie bei den genannten Bedienelementen auf anderen Gebieten sind auch erfolgt bei den auf die Insassen eines Fahrzeugs erforderlichen Anpassungen zur Einstellungen von Fahrzeugeinrichtungen, wie etwa Sitze, Spiegeleinstellungen, Lenkradhöhen etc. Hier sind jedoch eher Systeme erwünscht, die automatisch erkennen können, welcher Insasse vorhanden ist und die dessen bevorzugte Grundeinstellung bei den Fahrzeugeinrichtungen einstellen.

Bekannt sind diesbezüglich beispielsweise Sensoriksysteme zur Anwendung bei Sitzelementen insbesondere zur Passagiererkennung und -Überwachung. So offenbart z.B. die DE 10 2011 085 263 B4 ein Sensorelement zur Erkennung der Sitzbelegung, welches eine Messspule sowie eine die Messspule umgebendes und eine weitere Federspule bildendes Doppelfederelement aufweist. Die Messspule wird mit einem Wechselstrom beaufschlagt. Durch die induktive Kopplung zwischen Messspule und Federspule wird dann in der Messspule eine Spannung induziert, die einer Krafteinwirkung auf die Federspule und damit auf ein Sitzelement proportional ist. Ein solches elektromechanisches Sensorelement ist als Einzellösung in Sitzen sicher möglich, jedoch nicht zur Integration in Flächenelemente geeignet.

Die DE 602 06 786 T2 offenbart ein Verfahren zur Bestimmung von Gewichtsparametern eines Sitzpassagiers, bei dem mindestens zwei Parameter eines Belegungssensors ermittelt werden und über eine Korrelation ein Wahrscheinlichkeitsvektor bestimmt wird, der es erlaubt, einen bestimmten Sitzpassagier zu erkennen.

Die DE 10 2012 002 037 A1 offenbart eine Vorrichtung zur Durchführung von Fahrerzustandsanalysen, bei der am Rücken des Fahrers bzw. in der Rückenlehne eines Fahrersitzes angeordnete flach ausgebildete Elektromyografie-Sensoren (EMG Sensoren) anhand von mathematischen Vitalanalysen den Fahrerzustand bestimmen sollen.

Allgemein sind dekorative Flächenmaterialien im KFZ-Innenraum bei einer Vielzahl von Gegenständen bekannt. So weisen z. B. Armaturenbretter, Sitzbezüge und Türverkleidungen für Kraftfahrzeuge Leder- oder Textilbezüge auf, oder auch kunstlederne Innenverkleidungen / Kunststoffinnenverkleidungenmit dreidimensional geprägter Oberflächen bzw. Narbung.

Folien für die Innenverkleidung von Kraftfahrzeugen, für Möbel, Taschen oder ähnliches, landläufig auch als Kunstleder bezeichnet, besitzen oft einen mehrschichtigen Aufbau, sind oft unterschäumt und zeigen auf ihrer Oberseite dreidimensional strukturierte Oberflächen in verschiedensten Formen und Ausführungen. Der mehrschichtige Aufbau besteht in aller Regel aus einer oberen Deck- oder Dekorschicht, die mit der geprägten oder eingeformten Oberfläche versehen ist, und aus einer oder mehreren Unterschichten. Die Deckschicht ist in der Regel mit einer Lackschicht versehen und kann auch eingefärbt werden. Durch entsprechendes Einstellen der Schichten, auch durch angepasste Weichheit oder durch die bereits genannten geschäumten Schichten entsteht eine ansprechende Haptik, d.h. eine angenehm "weiche" Griffigkeit der Kunststofffolie sowie auch ein bestimmter Glanz, d.h. bestimmte Reflexionseigenschaften.

Weiterhin sind flächige Sensoren bekannt, beispielsweise ausgebildet als Berührungssensoren, als resistive und kapazitive Systeme. Resistive Systeme beruhen in der Regel auf zwei Lagen mit elektrisch leitendem oder halbleitendem Material (häufig ITO = Indium-Zinnoxid), wobei beide Lagen durch eine dünne Luftschicht oder Mikropunkte beabstandet sind. Durch Druck auf eine bestimmte Stelle werden beide Lagen kontaktiert und ein elektrisches Messsignal, welches durch die untere Lage gesendet wird, wird dadurch verändert. Dadurch lässt sich der Berührungspunkt lokalisieren. Solche Systeme sind Standard für starre Anwendungen wie Displays von Telefonen und und ähnlichen Bediengeräten. Flexible und gleichzeitig dehnfähige Anwendungen lassen sich jedoch so nicht realisieren.

Kapazitive Berührungssensoren beruhen auf einem kapazitiven Kupplungseffekt. Durch eine geeignete Beschichtung eines Substrats können auch eine Vielzahl voneinander unabhängige Berührungssensoren realisiert werden, die auch die gleichzeitige Detektion einer Vielzahl von Berührungspunkten erlauben. Typischerweise ist die zu berührende Fläche mit einem Sensor-Array, d.h. mit einer Anordnung einer Vielzahl von horizontalen und vertikalen Sensoren versehen, die als Sender oder Empfänger elektrischer Signale dienen. Ein solches System offenbart die US 2006097991 A1, wobei dort ein so genanntes "Touch-Panel" gezeigt ist, welches eine transparente kapazitive Sensoranordnung aufweist, die unterschiedliche Positionen von Berührungen auf der Bedienfläche oder Funktionsfläche erkennen und in Signale umformen kann.

Bekannt sind auch Sensoren auf Basis von leitfähigen Textilien. Solche Sensoren sind flexibel und dehnfähig. Allerdings müssen die leitfähigen textilen Fäden in üblichen textilen Verarbeitungsverfahren (Stricken, Weben etc.) verarbeitet werden, so dass nur flächige einzelne/separate elektrische Gebilde erzeugt werden können, ohne eine benutzerdefinierte Geometrie. Die Alternative wäre, die leitfähigen Fäden benutzerdefiniert auf einen textilen Untergrund aufzusticken, so dass ein aufwändiger Arbeitsgang notwendig ist und die gleichmäßige Dicke des Materials, die textile Ebenheit, schlechter wird.

Die US 7,145,432 B2 offenbart ein druckempfindliches flexibles Schaltelement in Folienform als Bedienungselement (user interface), welches textilartige Elektroden aufweist, die über und unter einem textilen Element angeordnet sind, welches seinen elektrischen Widerstand druckabhängig ändert. Die Elektroden detektieren die Widerstandsänderung und erzeugen somit ein in vielen Anwendungen verwertbares Signal. Wird ein solches Bedienelement jedoch unter starker Dehnung auf einen Träger gespannt und dort fixiert, ist in den gedehnten Bereichen die Schaltfunktion verändert oder behindert.

Die WO9837790A1 offenbart einen Fahrzeugsitz mit einem System von aufblasbaren Luftzellen, bei dem das jeweilige Druckniveau der Luftzellen individuell geregelt werden kann.

In keinem Fall ist bisher aber ein Flächengebilde vorgestellt worden, insbesondere ein dekoratives Flächenmaterial, das auf Zustandsänderungen "reagieren" und sich verändern oder anpassen kann.

Für die Erfindung bestand also die Aufgabe, ein System beinhaltend ein Flächenmaterial bereitzustellen, insbesondere für Sitzpolster im Fahrzeug, wobei das Flächenmaterial flexibel und dehnfähig als Oberflächen- bzw. Dekorflächenmaterial eingesetzt werden kann, also etwa als dekorative Folie im Kfz-Innenraum, wobei das Flächenmaterial abhängig von Sensorsignalen an seine Belastung bzw. an den Umgebungszustand angepasst werden kann oder veränderbar ist und insbesondere eine individuelle Einstellung auf den jeweiligen Fahrzeuginsassen ermöglicht, und das dazu auch noch ohne zu große Schwierigkeiten herstellbar ist.

Gelöst wird diese Aufgabe durch die Merkmale des Hauptanspruchs. Weitere vorteilhafte Ausbildungen sind in den Unteransprüchen offenbart, besondere Anwendungen in den Nebenansprüchen.

Dabei weist das Flächenmaterial integrierte Sensor- oder Signalelementen auf, sowie in Wirkverbindung mit dem Flächenmaterial stehende Aktoren oder Stellelemente. Darüber hinaus sind
- sowohl die Sensor- oder Signalelemente als auch die Aktoren oder Stellelemente jeweils begrenzten Bereichen des Flächenmaterials zugeordnet,
- wobei die Signalelemente mit Eingangskanälen eines elektronischen Steuergeräts und die Aktoren oder Stellelemente mit Ausgangskanälen des elektronischen Steuergeräts so verbunden sind, dass Sensorsignale von den Signalelementen an das Steuergerät und Stellsignale vom Steuergerät an die Aktoren übermittelbar sind,
- wobei die Sensor- oder Signalelemente so ausgebildet und angeordnet sind, dass durch äußere Einwirkungen veränderbare Zustandsgrößen der begrenzten Bereiche des Flächenmaterials detektierbar und als entsprechende Sensorsignale an das Steuergerät übermittelbar sind,
- wobei die Aktoren oder Stellelemente so angeordnet sind, dass das Flächenmaterial bzw. dessen Zustandsgrößen in den begrenzten Bereichen durch
die anhand der Stellsignale aktivierten Aktoren oder Stellelemente veränderbar ist, wobei die Stellsignale abhängig von den Sensorsignalen im Steuergerät nach vorgegebenen Algorithmen erzeugbar sind.

Damit erhält man ein Flächenmaterial oder Flächengebilde, das auf Zustandsänderungen "reagieren" und sich verändern oder anpassen kann, also beispielsweise seine Oberfläche an eine einwirkende Belastung oder an eine benachbarte, anliegende Gegenstandoberfläche anpassen kann. Das erfindungsgemäße Flächenmaterial weist somit eine "natürliche" Reaktion auf gegenüberliegende Gegenstände, Belastungen oder Umgebungseinflüsse auf.

Als Aktor oder Aktuator bezeichnet man dabei ein Stell- oder Funktionselement, das auf ein Signal, oft ein elektrisches oder pneumatisches Signal reagiert und das Signal in eine i.d.R. mechanische Größe umformt bzw. umsetzt. Unter dem Begriff "Aktorik", oft auch als Aktuatorik bezeichnet, versteht man allgemein ein aus mehreren Komponenten bestehendes System bzw. eine Einrichtung zur aktiven Erzeugen einer mechanischen Veränderung, einer Zustandsänderung, einer Bewegung oder einer Verformung durch entsprechende Stellelemente.

Das Flächenmaterial als solches kann dabei in Wirkverbindung mit dem Flächenmaterial stehende Aktoren oder Stellelemente aufweisen oder aber lediglich eine Wirkverbindung mit Aktoren oder Stellelementen aufweisen, die nicht notwendigerweise in oder an dem Flächenmaterial als solchem angeordnet sind, die aber auf das Flächenmaterial einwirken. Die Erfindung betrifft damit sozusagen ein dem Flächenelement/dem Flächenmaterial zuzuordnendes Gesamtsystem aus Sensor-und Signalelementen, Steuerungseinrichtung oder Steuergerät, Aktoren und einer sie verbindenden Schaltung und geometrischen Anordnung bzw. Wirkverbindung.

Insbesondere dann, wenn das erfindungsgemäße Flächenmaterial aus polymerem Material besteht und eine mit einer mit einer Narbung oder Prägung versehenen Oberfläche aufweist, besteht eine vorteilhafte Weiterbildung darin, dass wobei die in dem Flächenmaterial integrierten Sensor- oder Signalelemente als eine oder mehrere Schichten leitfähigen Materials ausgebildet sind, vorzugsweise als induktiv, kapazitiv oder triboelektrisch auf Zustandsänderungen der begrenzten Bereiche reagierende Schichten, vorzugsweise mehrere miteinander reagierende Schichten. Auf diese Weise lässt sich die Sensor-und Signalfunktion einfach innerhalb des Flächenelementes integrieren, indem nämlich -möglichst bereichsweise - einzelne miteinander reagierende leitfähige Schichten vorgesehen sind, die dann die für das Steuergerät und für den Betrieb der Stellelemente benötigten Signale erzeugen.

Eine weitere vorteilhafte Ausbildung solcher schichtförmigen Sensor- oder Signalelemente besteht darin, dass die Schichten leitfähigen Materials in Form einer leitfähigen Paste im Siebdruckverfahren aufgebracht sind. Das wiederum erleichtert das Aufbringen solcher Schichten und erlaubt ein kostengünstiges Herstellungsverfahren.

Erfindungsgemäß weist das Flächengebilde eine textile Struktur in Form eines textilen Gewirkes oder Gewebes auf, wobei die in dem Flächenmaterial integrierten Sensor- oder Signalelemente als leitfähige Fäden innerhalb der texilen Struktur ausgebildet sind, die im Zusammenwirken miteinander induktiv, kapazitiv oder triboelektrisch auf Zustandsänderungen der begrenzten Bereiche reagieren. Eine solche textile Struktur dient einerseits der Verstärkung des Flächengebildes und andererseits auch der Bereitstellung einer besonderen Haptik. Dadurch, dass das Gewirke oder Gewebe gleichzeitig auch noch als Signalelement dienen kann, vereinigt man mehrere Funktionen in einem einzigen Bauteil.

Eine weitere vorteilhafte Ausbildung besteht darin, dass im Steuergerät ein Speichermedium vorgesehen ist, in welchem sowohl die Sensorsignale der durch äußere Einwirkungen veränderten Zustandsgrößen als auch die entsprechenden im Steuergerät hierzu erzeugten Stellsignale speicherbar und einem spezifischen Belastungsfall zuzuordnen sind, wobei ein Algorithmus zur Erstellung einer Katalogdatei mit abrufbaren und den Sensorsignalen zuzuordnenden Belastungsfällen und den zugehörigen jeweils zur Veränderung der Zustandsgrößen der begrenzten Bereiche des Flächenmaterials erforderlichen Stellsignalen für die Stellelemente vorgesehen ist. Durch eine solche Ausbildung des Flächengebildes, des Speichers und des gesamten Systems ist es möglich, bereits bekannte Belastungsfälle und die entsprechende Reaktion des Flächengebildes darauf in einer Art Datenbank in Form einer Katalogdatei abzuspeichern und wieder aufzurufen, denn von den Signalelementen/ dem Algorithmus erkannt wird, dass der gleiche Belastungsfall wieder auftritt. Insoweit lässt sich eine Individualisierung der Reaktion des Flächengebildes erreichen, beispielsweise das Wiedererkennen einzelner Personen, die ein solches Flächenelement benutzen oder unter Krafteinwirkung beeinflussen, und die entsprechende Einstellung der Aktoren bzw. das Abrufen gespeicherter Stellsignale.

In besonderer Weise ist ein solches flexibles Flächenmaterial für eine Polsterung bzw. für ein Polster geeignet. Dementsprechend ist unter Berücksichtigung einer einzigen zugrundeliegenden erfinderischen Idee die Erfindung auch auf ein Polster für ein Ruhe- oder Sitzmöbel gerichtet, welches ein erfindungsgemäßes flexibles Flächenmaterial aufweist. Dabei ist das flexible Flächenmaterial vorzugsweise als flächiges Bezugsmaterial für das Polster ausgebildet, wobei das Polster weiterhin mehrere einzelne Polsterelemente oder Polsterkörper aufweist, die durch ein oder mehrere Befülleinrichtungen mit einem Medium befüllbar sind.

Die in dem flexiblen Flächenmaterial integrierten Sensor- oder Signalelemente sind so angeordnet, dass der Zustand bzw. Befüllzustand einer oder mehrerer Polsterelemente in begrenzten Bereichen des Polsters detektierbar ist und entsprechende Sensorsignale an das Steuergerät übermittelbar sind. Dabei sind die Signalelemente mit Eingangskanälen eines elektronischen Steuergeräts und die Befülleinrichtungen mit Ausgangskanälen des elektronischen Steuergeräts so verbunden, dass Sensorsignale von den Signalelementen an das Steuergerät und Stellsignale vom Steuergerät an die Befülleinrichtungen übermittelbar sind, wobei die Befülleinrichtungen so angeordnet sind, dass die Polsterelemente anhand von Stellsignalen befüllbar oder zu entlüften sind, die abhängig von den Sensorsignalen im Steuergerät nach vorgegebenen Algorithmen erzeugbar sind.

Die Sensor-und Signalelemente sind hierbei beispielsweise innerhalb des Flächenmaterials als einfache Drucksensoren ausgebildet und können so punktuelle Eindrückvorgänge detektieren und dann über das Steuergerät nach einem vorgegebenen Algorithmus hinter dem Flächenmaterial liegende Polsterkörper über entsprechende Stellsignale an eine Befülleinrichtung mehr oder weniger aufpumpen oder entlasten. Ein solches Polster, beispielsweise als Polster für einen Sitz oder eine Liege, weist einen erhöhten Komfort auf und ermöglicht die Einstellung einer individuellen Sitzpassform. Die Drucksensoren sind dabei im einfachsten Fall so ausgebildet, dass mindestens ein Drucksensor einem Bezugsmaterial/Flächenmaterial eines Polsterelements zugeordnet ist.

Besonders vorteilhaft lässt sich ein solches Polster für einen Kraftfahrzeugsitz verwenden, wobei die Polsterelemente oder Polsterkörper als Sitz-, Seiten- oder Rückenpolsterelemente in Form von Luftpolsterelemente ausgebildet sind.

Dadurch ergibt sich nicht nur ein erhöhte Sicherheit durch beispielsweise eine Optimierung des Seitenhalts für den Fahrer, sondern es lässt sich im Zusammenwirken mit der oben bereits beschriebenen Erstellung einer Katalogdatei mit abrufbaren und den Sensorsignalen zuzuordnenden Belastungsfällen auch eine umfassende Individualisierung der Port Einstellung auf den jeweiligen Fahrer bzw. auf die Insassen durchführen.

Außerdem ist durch die Ausbildung der Aktoren als Befülleinrichtungen für Luftpolsterelemente ein in vielen Kraftfahrzeugen schon verfügbares Medium, nämlich Druckluft, nutzbar, beispielsweise bereitgestellt über einen im Fahrzeug befindlichen Kompressor und/oder Druckspeicher.

Die Passform bzw. die Polsterung eines solchen Kraftfahrzeugsitzes kann intuitiv durch den Nutzer optimiert und auf seine beste Sitzhaltung angepasst werden. Das hierzu erforderliche Verfahren zur Anpassung besteht einfach darin, dass die Luftpolsterelemente bzw. das Flächenmaterial/Bezugsmaterial der jeweiligen Luftpolsterelemente mit den integrierten Sensoren beispielsweise durch Körperbewegungen, durch Drücken oder Pumpgesten einzeln oder auch gemeinsam/ symmetrisch angesprochen und zur Signalabgabe veranlasst werden können. Über das Steuergerät werden dann die entsprechenden Aktoren/Befülleinrichtungen angesprochen. Es findet dann solange ein Befüllen oder Entlüften der Polsterelemente statt, bis die optimale Sitzposition erreicht ist. Eine solche Anpassung kann auch fortlaufend erfolgen, so dass über die Zeit immer wieder eine andere, temporär entlastende Sitzposition eingestellt wird.

## Patentansprüche

1. System, aufweisend ein flexibles Flächenmaterial, Sensor- oder Signalelemente, eine Steuerungseinrichtung oder ein Steuergerät, Aktoren oder Stellelemente und eine sie verbindende Schaltung, wobei die Sensor- oder Signalelemente in das flexible Flächenmaterial integriert sind, wobei die Aktoren oder Stellelemente in Wirkverbindung mit dem Flächenmaterial stehen,
- wobei sowohl die Sensor- oder Signalelemente als auch die Aktoren oder Stellelemente jeweils begrenzten Bereichen des Flächenmaterials zugeordnet sind,
- wobei die Sensor- oder Signalelemente mit Eingangskanälen der elektronischen Steuerungseinrichtung oder des Steuergeräts und die Aktoren oder Stellelemente mit Ausgangskanälen der elektronischen Steuerungseinrichtung oder des Steuergeräts so verbunden sind, dass Sensorsignale von den Sensor- oder Signalelementen an die elektronische Steuerungseinrichtung oder das Steuergerät und Stellsignale von der elektronischen Steuerungseinrichtung oder dem Steuergerät an die Aktoren oder Stellelemente übermittelbar sind,
- wobei die Sensor- oder Signalelemente so ausgebildet und angeordnet sind, dass durch äußere Einwirkungen veränderbare Zustandsgrößen der begrenzten Bereiche des Flächenmaterials detektierbar und als entsprechende Sensorsignale an die Steuerungseinrichtung oder das Steuergerät übermittelbar sind,
- wobei die Aktoren oder Stellelemente so angeordnet sind, dass das Flächenmaterial bzw. dessen Zustandsgrößen in den begrenzten Bereichen durch die anhand der Stellsignale aktivierten Aktoren oder Stellelemente veränderbar ist,
wobei die Stellsignale abhängig von den Sensorsignalen in der Steuerungseinrichtung oder in dem Steuergerät nach vorgegebenen Algorithmen erzeugbar sind, **dadurch gekennzeichnet, dass** das Flächenmaterial eine textile Struktur in Form eines textilen Gewirkes oder Gewebes aufweist,
wobei die in dem Flächenmaterial integrierten Sensor- oder Signalelemente als leitfähige Fäden innerhalb der texilen Struktur ausgebildet sind, die im Zusammenwirken miteinander induktiv, kapazitiv oder triboelektrisch auf Zustandsänderungen der begrenzten Bereiche reagieren.

2. System nach Anspruch 1, bei dem in der Steuerungseinrichtung oder in dem Steuergerät ein Speichermedium vorgesehen ist, in welchem sowohl die Sensorsignale der durch äußere Einwirkungen veränderten Zustandsgrößen als auch die entsprechenden in der Steuerungseinrichtung oder in dem Steuergerät hierzu erzeugten Stellsignale speicherbar und einem spezifischen Belastungsfall zuzuordnen sind, wobei ein Algorithmus zur Erstellung einer Katalogdatei mit abrufbaren und den Sensorsignalen zuzuordnenden Belastungsfällen und den zugehörigen jeweils zur Veränderung der Zustandsgrößen der begrenzten Bereiche des Flächenmaterials erforderlichen Stellsignalen für die Aktoren oder Stellelemente vorgesehen ist.

3. Polster für ein Ruhe- oder Sitzmöbel, welches ein System nach einem der vorhergehenden Ansprüche aufweist, vorzugsweise ein so ausgebildetes flächiges Bezugsmaterial, wobei das Polster weiterhin mehrere einzelne Polsterelemente oder Polsterkörper aufweist, die durch ein oder mehrere Befülleinrichtungen mit einem Medium befüllbar sind, wobei die integrierten Sensor- oder Signalelemente so angeordnet sind, dass der Befüllzustand einer oder mehrerer Polsterelemente in begrenzten Bereichen des Polsters detektierbar und entsprechende Sensorsignale an die Steuerungseinrichtung oder das Steuergerät übermittelbar sind, wobei die Sensor- oder Signalelemente mit Eingangskanälen der elektronischen Steuerungseinrichtung oder des Steuergeräts und die Befülleinrichtungen mit Ausgangskanälen der elektronischen Steuerungseinrichtung oder des Steuergeräts so verbunden sind, dass die Sensorsignale von den Sensor- oder Signalelementen an die Steuerungseinrichtung oder das Steuergerät und die Stellsignale von der Steuerungseinrichtung oder dem Steuergerät an die Befülleinrichtungen übermittelbar sind, wobei die Befülleinrichtungen so angeordnet sind, dass die Polsterelemente anhand der Stellsignale befüllbar oder zu entlüften sind, die abhängig von den Sensorsignalen in der Steuerungseinrichtung oder dem Steuergerät nach vorgegebenen Algorithmen erzeugbar sind.

4. Polster nach Anspruch 3, bei dem die Sensor- oder Signalelemente als Drucksensoren ausgebildet sind, wobei vorzugsweise mindestens ein Drucksensor einem Polsterelement zugeordnet ist.

5. Kraftfahrzeugsitz mit einem Polster nach Anspruch 3 oder 4, wobei die Polsterelemente oder Polsterkörper als Sitz-, Seiten- oder Rückenpolsterelemente in Form von Luftpolsterelemente ausgebildet sind.

## Claims

1. System having a flexible surface material, sensor or signal elements, a control device or a control unit, actuators or actuating elements and a circuit connecting them, wherein the sensor or signal elements are integrated in the flexible surface material, wherein the actuators or actuating elements are operatively connected to the surface material,
- wherein both the sensor or signal elements and the actuators or actuating elements are each assigned to restricted regions of the surface material,
- wherein the sensor or signal elements are connected to input channels of the electronic control device or control unit and the actuators or actuating elements are connected to output channels of the electronic control device or control unit in such a manner that sensor signals can be transmitted from the sensor or signal elements to the electronic control device or control unit and actuating signals can be transmitted from the electronic control device or control unit to the actuators or actuating elements,
- wherein the sensor or signal elements are designed and arranged in such a manner that state variables of the restricted regions of the surface material, which state variables can be changed by external effects, can be detected and can be transmitted as corresponding sensor signals to the control device or control unit,
- wherein the actuators or actuating elements are arranged in such a manner that the surface material or its state variables can be changed in the restricted regions by the actuators or actuating elements activated on the basis of the actuating signals,
wherein the actuating signals can be generated on the basis of the sensor signals in the control device or control unit according to predefined algorithms, **characterized in that** the surface material has a textile structure in the form of a textile knitted fabric or woven fabric,
wherein the sensor or signal elements integrated in the surface material are in the form of conductive threads inside the textile structure, which, in interaction with one another, react inductively, capacitively or triboelectrically to state changes of the restricted regions.

2. System according to Claim 1, in which a storage medium is provided in the control device or control unit, in which storage medium both the sensor signals of the state variables changed by external effects and the corresponding actuating signals generated in this respect in the control device or control unit can be stored and can be assigned to a specific load situation, wherein an algorithm for creating a catalogue file containing load situations, which can be retrieved and assigned to the sensor signals, and the associated actuating signals for the actuators or actuating elements, which are each needed to change the state variables of the restricted regions of the surface material, is provided.

3. Cushion for an item of resting or seating furniture, which has a system according to one of the preceding claims, preferably a two-dimensional covering material designed in this manner, wherein the cushion also has a plurality of individual cushion elements or cushion bodies which can be filled with a medium by one or more filling devices, wherein the integrated sensor or signal elements are arranged in such a manner that the filling state of one or more cushion elements in restricted regions of the cushion can be detected and corresponding sensor signals can be transmitted to the control device or control unit, wherein the sensor or signal elements are connected to input channels of the electronic control device or control unit and the filling devices are connected to output channels of the electronic control device or control unit in such a manner that the sensor signals can be transmitted from the sensor or signal elements to the control device or control unit and the actuating signals can be transmitted from the control device or control unit to the filling devices, wherein the filling devices are arranged in such a manner that the cushion elements can be filled or emptied on the basis of the actuating signals which can be generated on the basis of the sensor signals in the control device or control unit according to predefined algorithms.

4. Cushion according to Claim 3, in which the sensor or signal elements are in the form of pressure sensors, wherein at least one pressure sensor is preferably assigned to a cushion element.

5. Motor vehicle seat having a cushion according to Claim 3 or 4, wherein the cushion elements or cushion bodies are in the form of seat, side or backrest cushion elements in the form of air cushion elements.

## Revendications

1. Système, comportant un matériau de surface souple, des éléments de capteur ou de signal, un dispositif de commande ou un appareil de commande, des actionneurs ou des éléments de réglage et un circuit qui les relient, les éléments de capteur ou de signal étant intégrés dans le matériau de surface flexible, les actionneurs ou les éléments de réglage étant reliés fonctionnellement au matériau de surface,
- les éléments de capteur ou de signal ainsi que les actionneurs ou les éléments de réglage étant chacun associés à des zones limitées du matériau de surface,
- les éléments de capteur ou de signal étant reliés à des canaux d'entrée du dispositif de commande électronique ou de l'appareil de commande et les actionneurs ou les éléments de réglage étant reliés à des canaux de sortie du dispositif de commande électronique ou de l'appareil de commande de sorte que des signaux de capteur provenant des éléments de capteur ou de signal puissent être transmis au dispositif de commande électronique ou à l'appareil de commande et des signaux de réglage provenant du dispositif de commande électronique ou de l'appareil de commande puissent être transmis aux actionneurs ou aux éléments de réglage,
- les éléments de capteur ou de signal étant conçus et disposés de façon à pouvoir détecter des grandeurs d'état des zones limitées du matériau de surface, lesquelles grandeurs d'état peuvent être modifiées par des influences extérieures, et à les transmettre en tant que signaux de capteur correspondants au dispositif de commande ou à l'appareil de commande,
- les actionneurs ou les éléments de réglage étant disposés de façon à pouvoir modifier le matériau de surface ou des grandeurs d'état de celui-ci, dans les zones limitées, par le biais des actionneurs ou des éléments de réglage activés à l'aide des signaux de réglage, les signaux de réglage pouvant être générés en fonction des signaux de capteur dans le dispositif de commande ou dans l'appareil de réglage selon des algorithmes spécifiés, **caractérisé en ce que** le matériau de surface comporte une structure textile sous la forme d'un tissu textile tricoté ou tissé,
les éléments de capteur ou de signal intégrés dans le matériau de surface étant conçus comme des fils conducteurs à l'intérieur de la structure textile qui interagissent les uns avec les autres et réagissent de manière inductive, capacitive ou triboélectrique aux changements d'état des zones limitées.

2. Système selon la revendication 1, dans lequel il est prévu dans le dispositif de commande ou dans l'appareil de commande un support de stockage dans lequel les signaux de capteur des grandeurs d'état modifiées par des influences extérieures ainsi que les signaux de réglage correspondants générés pour cela dans le dispositif de commande ou dans l'appareil de commande peuvent être stockés et doivent être associés à un cas de charge spécifique, un algorithme étant prévu pour créer un fichier de catalogue comprenant des cas de charge, qui peuvent être appelés et qui doivent être associés aux signaux de capteur, et des signaux de réglage associés destinés aux actionneurs ou aux éléments de réglage et nécessaires pour modifier les grandeurs d'état des zones limitées du matériau de surface.

3. Rembourrage d'un meuble de repos ou d'assise, lequel rembourrage comporte un système selon l'une des revendications précédentes, de préférence un matériau de revêtement sensiblement bidimensionnel conçu pour cela, le rembourrage comportant en outre une pluralité d'éléments de rembourrage ou de corps de rembourrage individuels qui peuvent être remplis d'un milieu par un ou plusieurs dispositifs de remplissage, les éléments de capteur ou de signal intégrés étant disposés de sorte que l'état de remplissage d'un ou plusieurs éléments de rembourrage puisse être détecté dans des zones limitées du rembourrage et que des signaux de capteur correspondants puissent être transmis au dispositif de commande ou à l'appareil de commande, les éléments de capteur ou de signal étant reliés à des canaux d'entrée du dispositif de commande électronique ou de l'appareil de commande et les dispositifs de remplissage étant reliés à des canaux de sortie du dispositif de commande électronique ou de l'appareil de commande de sorte que les signaux de capteur provenant des éléments de capteur ou de signal puissent être transmis au dispositif de commande ou à l'appareil de commande et les signaux de réglage provenant du dispositif de commande ou de l'appareil de commande puissent être transmis aux dispositifs de remplissage, les dispositifs de remplissage étant disposés de sorte que les éléments de rembourrage puissent être remplis ou dégonflés en fonction des signaux de réglage qui peuvent être générés selon des algorithmes spécifiés dans le dispositif de commande ou l'appareil de commande en fonction des signaux de capteur.

4. Rembourrage selon la revendication 3, dans lequel les éléments de capteur ou de signal sont réalisés sous forme de capteurs de pression, de préférence au moins un capteur de pression étant associé à un élément de rembourrage.

5. Siège de véhicule automobile comprenant un rembourrage selon la revendication 3 ou 4, les éléments de rembourrage ou les corps de rembourrage étant conçus comme des éléments de rembourrage de siège, de côté ou de dossier sous la forme d'éléments de rembourrage pneumatique.
